# EUROPÄISCHE PATENTSCHRIFT

(11) **EP 1 644 221 B1**
(45) Veröffentlichungstag und Bekanntmachung des Hinweises auf die Patenterteilung: **25.11.2009**
(21) Anmeldenummer: 04763815.0
(22) Anmeldetag: 05.08.2004
(51) Int. Cl.: B60R 11/02, E05C 19/02

(54) **SPERRE ZUM VERHINDERN EINER FEHLBEDIENUNG EINER KLAPPE**
BLOCKING ELEMENT FOR PREVENTING MALOPERATION OF A FLAP
DISPOSITIF DE VERROUILLAGE POUR EVITER LES ERREURS DE MANIPULATION D'UN VOLET

(30) Priorität: 08.08.2003 DE 10336506
(43) Veröffentlichungstag der Anmeldung: 12.04.2006
(73) Patentinhaber: Dr. Schneider Kunststoffwerke GmbH, 96317 Kronach-Neuses (DE)
(72) Erfinder: SCHMID, Klaus, 96342 Stockheim (DE); UHLENBUSCH, Olaf, 96275 Marktzeuln (DE)
(74) Vertreter: Eichstädt, Alfred
(86) Internationale Anmeldenummer: PCT/EP2004/008771
(87) Internationale Veröffentlichungsnummer: WO 2005/016696

(56) Entgegenhaltungen:
- DE-A- 3 538 224
- DE-A- 10 008 887
- FR-A- 2 785 578

## Beschreibung

Die Erfindung betrifft eine Sperre zum Verhindern einer Fehlbedienung einer Klappe mit den in den Oberbegriffen der Ansprüche 1 und 2 angegebenen Merkmalen.

Aus der DE 298 11 584 U1 ist ein elektrisches Gerät mit einer eine Öffnung abdeckenden schwenkbaren Frontklappe bekannt, die vollautomatisch geöffnet und geschlossen werden kann. Hierzu ist ein Motor vorgesehen, der über eine Hebelanordnung mit einem Zahnrad auf ein Zahnradsegment an der Klappe wirkt.

Aus der DE 100 44 557 A1 ist ein Antrieb zum Öffnen und Schließen eines Deckels in einem Kraftwagen bekannt, bei dem der Antrieb mit einem Hebel ausgebildet ist, der eine Rasteinrichtung, beispielsweise einen Federstift aufweist, der durch Federkraft in eine Rastkerbe gedrückt wird, die beim Überschreiten einer vorgegebenen Kraft ausrastet und dadurch einen Elektromotor zum Öffnen und zum Schließen des Deckels von dem Deckel trennt. Durch den Hebel ist es zum einen möglich, den Deckel auch bei Ausfall des Elektromotors durch Ausrasten des Hebels von Hand zu öffnen. Zum anderen bildet der Hebel eine Überlastsicherung für den Elektromotor bei blockiertem Deckel.

Des Weiteren ist aus der DE 35 38 224 A1 eine Abdeckblende für ein Autoradio bekannt, die beim Öffnen oberhalb des Radios in einen Spalt in der Konsolenvorderwand hineingezogen wird. Zum Hineinziehen ist ein Seilzugmotor vorgesehen, der durch Umkehrsteuerung ein Verschließen des Deckels bewirkt.

Aus der FR2785578 ist eine Abdeckblende für ein Autoradio bekannt, die manuel geöffnet, im öffneten zustand durch eine sperre gehalten, und voll automatisch durch z.B. die Fernbedieneinheit des Fahrzungs geschlassen wird.

Bei hochwertigen Personen-Kraftfahrzeugen ist es bekannt, die in der Mittelsäule unterhalb des Armaturenbrettes angebrachten elektronischen Kommunikations- und unterhaltungselektronischen Geräte ebenso wie die in dem Armaturenbrett eingesetzten Geräte durch Klappen zu verdecken. Dabei übergreifen die Klappen bei einigen Ausführungen mehrere Einschubkomponenten und verdecken diese bei Nichtgebrauch. Derartige Klappen weisen keinen zentralen Drehpunkt auf, sondern sind um eine oben liegende Achse nach oben verschwenkbar und zugleich mit den Lagerbolzen auch in die Öffnung hinein verschiebbar gelagert.

Mittels einer sogenannten Push-Push-Mechanik wird dabei die geschlossene Klappe durch Druck auf einen unteren Flächenbereich, vorzugsweise markierten Bereich, der Klappe entriegelt und durch einen Federantrieb automatisch verschwenkt und in die Öffnung hineingeschoben. Zu diesem Zweck sind an den Seitenwänden drehbar gelagerte Schwenkarme vorgesehen, die mit Federantrieben in Verbindung stehen. Die Push-Push-Mechanik ist realisiert durch eine Herzkurvenführung, in die ein verschwenkbarer Hebel mit einem Bolzen eingreift. Dieser Bolzen greift in die Herzkurve ein und hält die Klappe in der heruntergedrückten Position fest. Durch erneuten Druck auf die Klappe im unteren Bereich wird der Bolzen in der Herzkurve verschoben, wodurch der Hebel in eine Position gebracht wird, in der die Schwenkbewegung der Klappe freigegeben wird. Beim Schließen der Klappe wird der Federantrieb gespannt, so dass eine automatische Öffnung nach der Entsperrung erfolgt. Bei solchen Klappen, die eine Viergelenklagerung aufweisen, ist der Antrieb zudem mit Viskosebremsen oder mechanischen Bremsen gekoppelt, um eine sanfte Öffnung und Schwenkbewegung zu gewährleisten.

Bei den bekannten Klappenausführungen hat es sich als nachteilig erwiesen, dass diese im geschlossenen Zustand auch verschwenkt werden können, wenn auf die Außenseite der Klappe im oberen Bereich, oberhalb des Schwenklagers der Klappe, gedrückt wird. Die Schließstellung ist darüber hinaus, bezogen auf die Führung der oberen Schwenkachse, nicht genau definiert, da diese für eine sichere Endstellung zu viele Freiheitsgrade aufweist.

Der Erfindung liegt deshalb die Aufgabe zu Grunde, eine Sperre vorzusehen, die ein Öffnen der Klappe durch Druck auf die Klappe im oberen Bereich vermeidet und sicherstellt, dass die Klappe nur durch eine Push-Push-Bewegung durch Druck auf ihren unteren Bereich verschwenkbar ist.

Die Aufgabe löst die Erfindung durch Ausgestaltung der Sperre in einer Klappenanordnung mit den in Anspruch 1 und den in dem nebengeordneten Anspruch 2 angegebenen Merkmalen.

Der Sicherungshebel kann schwenkbeweglich an der Rückseite der Klappe im oberen Bereich angebracht sein. Er kann aber auch als federnder Hebel mit einer Rastnase am Ende ausgebildet sein, welche Rastnase bei geschlossener Klappe in eine Falle einrastet oder einen Ansatz an der Seitenwand hintergreift. Im Falle obenseitiger Anordnung sollte die Rastnase sich nach unten erstrecken; im Falle der Anordnung an der Unterseite von unten nach oben. Umgekehrte Ausführungen sind ebenfalls möglich. Die Untergreif-Schwenkhebelanordnung, die bei der Push-Push-Bewegung den Rastansatz aus der Falle aushebt, muss dabei so angeordnet sein, dass durch eine stirnseitige Kurvenbahn der federnde Hebel um mindestens die Höhe des Rastansatzes angehoben wird, um die Schwenkbewegung freizugeben. Der Hebelarm muss bei dieser festen Ausführung vorne so geformt sein, dass er auflaufend hinter den Ansatz gleitet bzw. über diesen gezogen werden kann. Auch bei der Ausbildung mit einer Falle sind diese Bedingungen einzuhalten.

Bei der im Anspruch 2 angegebenen Ausführung mit einer Klinke ist die Klinke schwenkbeweglich an einer Seitenwand anzubringen. Sie hintergreift in der geschlossenen Position die Klappe durch Federbelastung oder Eigengewicht oder - je nach baulicher Anordnung - einen Sperrhaken an der Rückseite der Klappe. Die Klinke kann als einseitiger Hebel oder als zweiseitiger Hebel ausgebildet sein. In jedem Fall ist die Schwenkhebelanordnung so auszubilden, dass die Klinke um ihren Drehpunkt verschwenkt wird, um den Klinkenansatz über den Rastansatz anzuheben und um die Schwenkbewegung der Klappe freizugeben. Die Klinke kann auch ein federnder Hebel sein, der sich vom Inneren der Öffnung kommend entlang der Seitenwand nach vorne erstreckt und beispielsweise einen Rastansatz an der Rückseite der Klappe im unteren Bereich nach dem Aufgleiten hintergreift. Dieser Rastansatz kann für die Push-Push-Bewegung eine Gleitkurve aufweisen, die beim Druck auf die Klappe automatisch eine Anhebung bewirkt, ähnlich einer Herzkurve. Sie kann im weiteren Verlauf Herzkurvenförmig ausgebildet sein, um die Bewegung der Klappe freizugeben.

Eine bevorzugte Ausführungsform ist in Anspruch 3 angegeben, die darin besteht, dass der Sicherungshebel an der Rückseite der Klappe angelenkt ist, vorzugsweise im Bereich der oder auf der Schwenkachse der Klappe. An dem Sicherungshebel ist ein Sicherungselement seitlich in Richtung der Seitenwand angebracht, das in einer Kulissenbahn gleitend eingreift. Die Kulissenbahn weist eine stufenförmige Falle im Einlaufbereich auf, in die das Sicherungselement fällt, wenn die Klappe geschlossen ist. Zum Lösen der Sperre wird das Sicherungselement oder der Sicherungshebel von einem Hebelarm einer Schwenkhebelanordnung untergriffen, die in Wirkverbindung mit der Klappe oder deren Schwenkarm mindestens während des Druckes auf den unteren Bereich der geschlossenen Klappe zur Druckentriegelung steht und das Sicherungselement aus der Falle anhebt. Das Sicherungselement wird durch die Schwenkbewegung der Klappe in die Kulissenbahn geschoben, während bei Druck auf den oberen Bereich der Klappe die Schwenkbewegung blockiert ist. Eine auf den Sicherungshebel wirkende Feder sorgt für eine Schaltsicherheit, damit der Sicherungshebel nicht unbeabsichtigt durch Fahrerschütterungen aus der Falle austreten und in die Kulissenbahn eintreten kann. Diese Feder kann eine Druck- oder Zugfeder sein.

Vorteilhafte Weiterbildungen der Ausgestaltungen der Erfindung sind in den Unteransprüchen 3 bis 13 selbsterklärend angegeben.

Die Erfindung wird nachfolgend anhand eines Beispiels näher erläutert, das in den Figuren dargestellt ist. In den Zeichnungen zeigen:
- Figur 1: einen Klappmechanismus an einer Seitenwand einer Öffnung und einen Ausschnitt einer Klappe in perspektivischer Darstellung,
- Figuren 2 bis 5: die Arbeitsweise der Sperre in Form einer Her- vorhebung der Falle unter Schwenkbewegung des Sicherungshebels,
- Figur 6: eine Seitenansicht des in Figur 1 dargestellten Ausführungsbeispiels,
- Figur 7: eine Schwenkstellung der Klappe bei Push-Push- Auslösung,
- Figur 8: eine mittlere Schwenkstellung der Klappe und
- Figur 9: eine Endschwenkstellung der Klappe im Inneren der Öffnung.

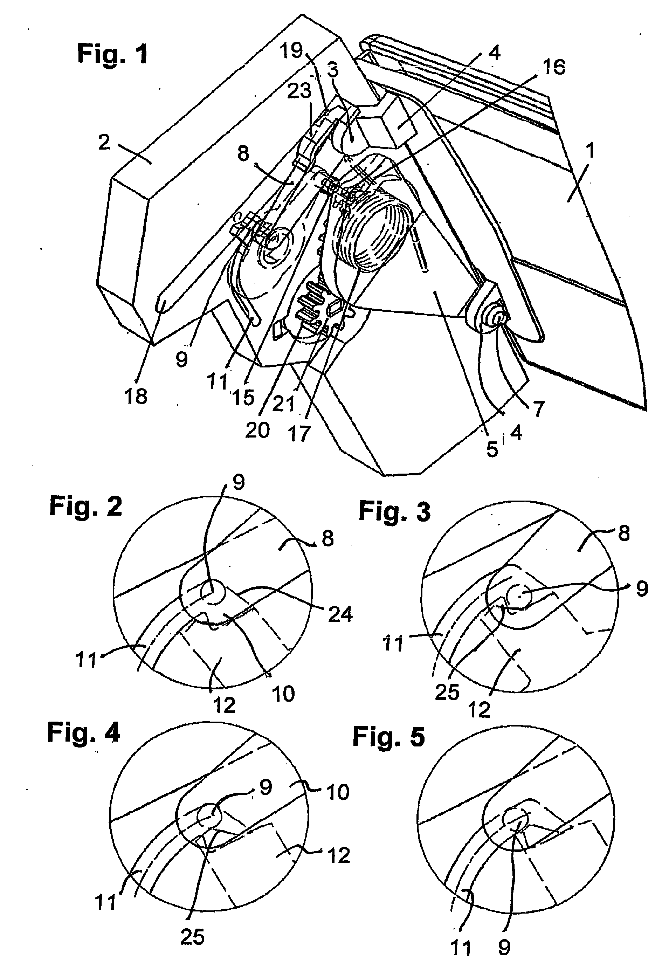

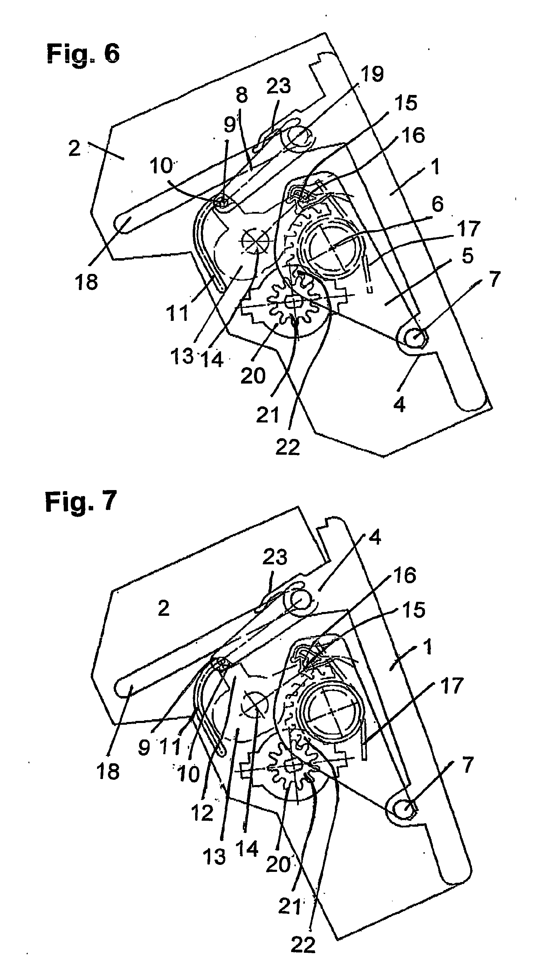

Die perspektivische Zeichnung in Figur 1 zeigt eine Klappe 1, die eine Öffnung verschließt, die seitlich durch die beiden Seitenwände 2, von denen nur eine dargestellt ist, begrenzt ist. Die Klappe 1 ist um eine obenseitig vorgesehene, an der an der Rückseite vorstehende Halterung 4 festgelegte Schwenkachse 3 verschwenkbar. Der angedeutete Lagerzapfen 19, der die Schwenkachse 3 gemeinsam mit dem gegenüberliegenden Lagerzapfen bildet, ist in einer in die Seitenwand 2 eingearbeitete Kulissenbahn 18, einer U-förmigen Nut, verdreh- und verschiebbar gelagert. Die Länge dieser im vorliegenden Fall im wesentlichen sich gerade erstreckenden und im wesentlichen im rechten Winkel zur Vorderseite verlaufenden Kulissenbahn 18 definiert den maximalen Einschiebeweg der Klappe 1 in das Innere der Öffnung. Sie kann auch in einen Bogen verlaufen. Die einnehmbare Endstellung ist in Figur 4 dargestellt, eine Zwischenstellung in Figur 3. Auf den Lagerzapfen 19 ist zwischen der Halterwand des Halters 4 und der Seitenwand 2 ein Sicherungshebel 8 schwenkbeweglich aufgesetzt. Dieser Sicherungshebel 8 weist an seinem hinteren Ende ein seitlich in Richtung der Seitenwand 2 vorstehendes Sicherungselement 9 in Form eines Bolzens auf, der in Figur 6 besser sichtbar dargestellt ist. Dieses Sicherungselement 9 steht seitlich aus dem Sicherungshebel 8 hervor und greift in eine weitere Kulissenbahn 11 ein, die abgebogen in die Seitenwand eingearbeitet ist und sich mit dem längeren Abschnitt im wesentlichen nach unten erstreckt. Die Kulissenbahn 11 weist im Einlaufabschnitt eine Falle 10 in Form eines stufenförmigen Absatzes innerhalb der Kulissenbahn 11 auf. In diese Falle 10 greift das Sicherungselement 9 ein und liegt an der stufenförmig abgesetzten Anschlagswand an, wenn die Klappe 1 die aus Figur 6 ersichtliche Verschließposition eingenommen hat.

Die Arbeitsweise der Sperre, wie sie in den übrigen Figuren dargestellt ist, wird nachfolgend anhand der Figuren 2 bis 5 näher beschrieben.

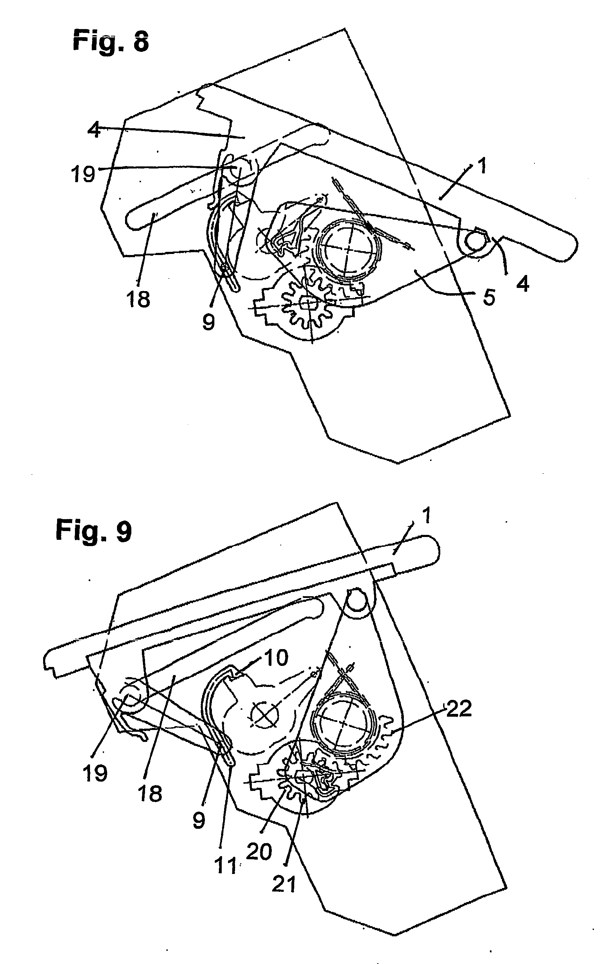

Bei der Darstellung in Figur 2 wird davon ausgegangen, dass die Klappe 1 sich kurz vor der Schließstellung, die in Figur 6 dargestellt ist, befindet. Der in der Herzkurve 16 geführte Bolzen 15 an der Schwenkhebelanordnung 13 befindet sich vor dem Überhub in der Herzkurve; die Klappe ist also noch nicht vollständig geschlossen. In diesem Fall greift das Sicherungselement 9, ein vorstehender Zapfen, an dem Sicherungshebel 8 gegen eine keilförmige Rampe 24, die in der Falle 10 vorgesehen ist. Wird nun die Klappe weiterhin zum Schließen nach unten gedrückt, so wird zwangsweise das Sicherungselement 9 an der keilförmigen Rampe 24 entlang geführt und zwar in Richtung des Bodens der Falle 10, wodurch der Sicherungshebel 8 mitgezogen und verschwenkt wird. Der Bolzen 15 in der Herzkurve 16 vollzieht dabei einen Überhub. Diese Rampe 24 ist aus Sicherheitsgründen eingefügt, da der Hebel 8, wenn er nur durch Schwerkraft nach unten fällt, nicht zwangsweise nach unten gezogen wird. Ist die Leichtgängigkeit auf dem Lagerzapfen 19 nicht gewährleistet, so könnte es unter Umständen dazu führen, dass der Sicherungshebel nicht in gewünschter Weise mit dem Sicherungselement 9 in die Falle hineinfällt. Damit dieser Prozess des Hineindrückens noch unterstützt wird und auch sichergestellt ist, dass bei Erschütterungen der Sicherungshebel 8 nicht nach oben schwenken kann, ist zusätzlich - wie aus den anderen Darstellungen (Figuren 1, 6 ff) der Sperre ersichtlich - eine Feder 23 am Halter 4 angebracht. Diese Feder 23 drückt mit ihrem federnden Schenkel auf den Sicherungshebel 8 und drückt diesen nach unten und unterstützt den Bewegungsablauf. Kommt der Bolzen 15 aus der Überhubposition in die untere Position des oberen Herzkurventeils, so nimmt das Sicherungselement 9 an dem Sicherungshebel 8 die in Figur 3 dargestellte Position ein, d. h. das Sicherungselement 9 liegt in der vorderen, in einer geringfügig vom 90°-Winkel abweichend gebildeten Ecke und ist hierin gesichert gehalten. Zugleich liegt aber auch - wie die Darstellung in Figur 3 zeigt - das Sicherungselement 9, nämlich der Zapfen, der seitlich aus dem Sicherungshebel 8 hervorsteht, an einer Gleitflanke 25 des Hebelarms 12 der Schwenkhebelanordnung 13 an. Wird nun - wie aus Figur 7 ersichtlich - auf die Klappe gedrückt, so bewirkt der in der Herzkurve 16 geführte Bolzen 15 ein Verschwenken der Schwenkhebelanordnung 13. Der Hebelarm 12 dieser Anordnung untergreift mit der Gleitflanke 25 das Sicherungselement und verschwenkt den Sicherungshebel 8 in die in Figur 4 dargestellte Position, in der das Sicherungselement in die Kulissenbahn 11 eintreten kann. Beim Loslassen der Klappe und beim Aufschwenken derselben durch die Feder 17 wird dabei das Sicherungselement 9 - wie aus Figur 5 ersichtlich - in die Kulissenbahn 11 hineingeschoben. Die Klappe 1 kann nun die Bewegung gemäß den Figuren 8 und 9 vollziehen.

Aus Figur 6 ist ersichtlich, dass der Sicherungshebel 8 mit einem offenen Stecklager auf den Lagerzapfen 19 aufgesteckt ist. Die Klappe 1 weist an der Rückseite im unteren Bereich ebenfalls einen Halter 4 auf, in dem sich eine Lagerbohrung befindet, in die ein Lagerzapfen eines unteren Drehlagers 7 eines Schwenkarms 5 eingesetzt ist. Mittels des Schwenkarms 5 wird die Klappe 1 nach oben geschwenkt, wenn sie entriegelt ist, wie aus den Figuren 8 und 9 ersichtlich ist. Auf den Schwenkarm 5, der um ein oberes Drehlager 6 drehbar gelagert ist, das sich zwischen dem unteren Drehlager 7 und der Schwenkachse 3 befindet, wirkt ein Federantrieb 17, der aus einer Wendelfeder besteht, deren einer Schenkel sich an einen Anschlag an der Seitenwand 2 abstützt und deren anderer Schenkel an einem Anschlag an dem Schwenkarm 5 anliegt, so dass unter Ausnutzung der Federspannkraft der Schwenkarm 5 nach der Entriegelung der Klappe 1 sich links herum dreht und die Klappe 1 von unten nach oben schwenkt, wobei gleichzeitig eine Verschiebung der Schwenkachse 3 in der Kulissenbahn 18 in die Öffnung hinein erfolgt. Zur Entriegelung ist nun erfindungsgemäß vorgesehen, dass das Sicherungselement 9 von einem Hebelarm 12 einer Schwenkhebelanordnung 13 untergriffen wird, die um ein Drehlager 14 drehbar gelagert ist. Der Hebelarm 12 weist eine Auflaufschräge bzw. Gleitflanke 25 auf, die bewirkt, dass durch Ausübung einer Drehung um einen kleinen Verschwenkwinkel auf die Schwenkhebelanordnung 13 das Sicherungselement 9 angehoben wird, wobei die Oberkante dieser stufenförmigen Führungsbahn am Einlauf in die Kulissenbahn 11 endet. Das Sicherungselement 9 wird gewissermaßen in die Kulissenbahn 11 eingeführt. Die Schwenkhebelanordnung 13 steht dabei in Wirkverbindung mit einer Herzkurve 16 und zwar über einen Bolzen 15, der seitlich aus dem zweiten Schenkel der Schwenkhebelanordnung 13 hervorsteht. Die Herzkurve 16 befindet sich auf dem, das obere Drehlager 6 überstehenden Teil des Schwenkarmes 5 und weist mit ihren Gleitflächen in Richtung der Seitenwand 11.

Wenn die Klappe 1 - wie in Figur 1 dargestellt ist - aus der Verschließposition geöffnet werden soll, ist es notwendig, gemäß Figur 7 unten auf die Klappe 1 zu drücken, wodurch der Bolzen 15 bzw. ein vorstehender Zapfen an der Schwenkhebelanordnung 13 in der dargestellten Herzkurve 16 so verschoben wird, dass die Schwenkhebelanordnung sich um das Drehlager 14 dreht. Der Hebel 12 wird also nach rechts gedreht und untergreift - wie aus Figur 4 ersichtlich - mit der Gleitflanke 25 das Sicherungselement 9 und drückt dieses hoch. Wird nun die Klappe 1 losgelassen, so kann die Herzkurve so ausgelegt sein, dass die Klappe 1 eine zweite Öffnungsstellung einnimmt. In dieser Öffnungsstellung befindet sich bereits das Sicherungselement 9 in der Kulissenbahn 11. Wird nun die Klappe 1 untergriffen oder aber die Herzkurve 16 ist so ausgelegt, dass eine anschließende automatische Öffnung durch die Feder 17 sofort erfolgt, vollzieht die Klappe 1 einen Schwenk gemäß Figur 8 oder schwenkt in die Endschwenkstellung gemäß Figur 9. Der Bolzen 15 gleitet dabei in der Herzkurve entlang. Zugleich verschwenkt die Herzkurve 16, die fest auf dem Schwenkarm 5 vorgesehen ist. Die Sperre ist also unwirksam.

Durch die erfindungsgemäße Verriegelung wird ein unbeabsichtigtes Aufschwenken der Klappe 1 verhindert. Des weiteren kann durch gleichzeitiges Einfallen des Sicherungselementes 9 in die Falle 10 die Klappe 1 durch Druck auf den oberen Bereich nicht verschoben oder geöffnet werden. Erfolgt nun eine Druckausübung auf den unteren Teil der Klappe 1 (push-push), so wird die Klappe 1 um die Schwenkachse 3 nach innen in die Öffnung geschwenkt und dabei der Schwenkarm 5 mitgenommen und verdreht, so dass der Bolzen 15 auf einer Herzkurvenbahn heruntergedreht wird, also der Schwenkbewegung folgt, wodurch die Schwenkhebelanordnung 13 um das Drehlager 14 verdreht wird und das Sicherungselement 9 über die Gleitfläche 25 des Hebelarmes 12 angehoben wird. Wird nun der Fingerdruck weggenommen und schwenkt die Klappe 1 durch die Federkraft auf, so gleitet der Bolzen 15 über die Herzkurvenspitze in einen zweiten Leitführungskurvenabschnitt ein und wird gänzlich freigegeben und gleitet durch die Öffnung der Lagerung der Herzkurve bei weiterer Schwenkbewegung des Schwenkarms 5 heraus. Der Federantrieb 17 verschwenkt die Klappe 1 in die in Figur 9 dargestellte Endposition. Damit nicht eine ruckartige Öffnung erfolgt, weist der Schwenkarm 5 an der Rückseite einen festen Zahnkranz 22 auf, dessen Verzahnung mit einem Zahnrad 21 einer Viskosebremse 20 gekoppelt ist. Diese Viskosebremse 20 wirkt dämpfend auf den Bewegungsablauf. Wird nun die Klappe aus der in Figur 4 dargestellten Position durch Ausübung eines Druckes auf den aus der Öffnung vorstehenden Teil der Klappe wieder nach unten geschwenkt, so wird gleichzeitig die Feder des Federantriebs 17 wieder gespannt und ein Zurückschwenken in die Verschließstellung bewirkt.

Wie ersichtlich, kommt dem Sicherungshebel 8 ferner eine zusätzliche Führungsfunktion zu. Das Sicherungselement 9 gleitet in die Kulissenbahn 11, die gebogen ausgeführt ist, und bietet somit einen weiteren Stabilitätspunkt. Die gesamte Klappenanordnung ist praktisch durch vier Gelenklagerungspunkte gesichert gehalten. Beim Verbringen der Klappe 1 in die Verschließposition gemäß Figur 6 fällt in der Endposition automatisch das Sicherungselement 9 wieder in die Falle 10 und verhindert ein unbeabsichtigtes Öffnen der Klappe durch Ausübung eines Druckes auf die Oberseite. Es ist also eine Missbrauchssperre gegeben, so dass die Klappe 1 nur durch Druck auf die Oberfläche im unteren Bereich der Klappe 1 geöffnet werden kann.

### Bezugszeichenliste

- 1: Klappe
- 2: seitliche Wand
- 3: Schwenkachse
- 4: Halter
- 5: Schwenkarm
- 6: oberes Drehlager
- 7: unteres Drehlager
- 8: Sicherungshebel
- 9: Sicherungselement
- 10: Falle
- 11: Kulissenbahn
- 12: Hebelarm
- 13: Schwenkhebelanordnung
- 14: Drehlager
- 15: Bolzen
- 16: Herzkurve
- 17: Feder
- 18: Kulissenbahn
- 19: Lagerzapfen
- 20: Viskosebremse
- 21: Zahnrad
- 22: Zahnkranz
- 23: Feder
- 24: keilförmige Rampe
- 25: Gleitflanke

## Patentansprüche

1. Sperre zum Verhindern einer Fehlbedienung einer Klappe (1) zum Verschließen einer Öffnung mit mindestens zwei beabstandeten Seitenwänden (2), welche Klappe (1)
- obenseitig eine Schwenkachse (3) aufweist, die an den Seitenwänden (2) in die Öffnung verschiebbar gelagert ist, und
- mit an der Rückseite im unteren Klappenbereich mindestens einseitig vorgesehenem Halter (4) mit einem Drehlager (7) für den Lagerbolzen an dem unteren Endabschnitt eines Schwenkarmes (5) eines Öffnungsantriebs, welcher Schwenkarm mit dem oberen Endabschnitt mittels eines Drehlagers (6) verschwenkbar an einer Seitenwand (2) gelagert ist, wobei
- das Drehlager (6) mindestens höhenversetzt gegenüber dem Drehlager (7) am Halter (4) bei geschlossener Klappe (1), jedoch unterhalb der Schwenkachse (3) der Klappe (1) angeordnet ist,
- auf den Schwenkarm (5) eine Antriebskraft zum Öffnen angreift, **dadurch gekennzeichnet, dass**
an der Rückseite der Klappe (1) mindestens ein Sicherungshebel (8) angelenkt ist, der ein Sicherungselement (9) aufweist, das in einer Kulissenbahn (11) mit einer Falle (10) geführt ist und in die Falle (10) bei geschlossener Klappe (1) fällt, welcher Sicherungshebel (8) durch eine Schwenkhebelanordnung (13), die mit der Klappe (1) mindestens während der Entriegelungsphase durch Ausübung eines Druckes auf den unteren Bereich der Klappe (1) in Wirkverbindung steht, derart verschwenkbar ist, dass das Sicherungselement (9) aus der Falle (10) gedrückt wird und die durch einen Öffnungsantrieb (17) ausgeübte Schwenkbewegung der Klappe (1) nur durch Ausübung eines Druckes auf den unteren Bereich der Klappe (1) freigibt.

2. Sperre zum Verhindern einer Fehlbedienung einer Klappe (1) zum Verschließen einer Öffnung mit mindestens zwei beabstandeten Seitenwänden (2), welche Klappe (1)
- obenseitig eine Schwenkachse (3) aufweist, die an den Seitenwänden (2) in die Öffnung verschiebbar gelagert ist, und
- mit an der Rückseite im unteren Klappenbereich mindestens einseitig vorgesehenem Halter (4) mit einem Drehlager (7) für den Lagerbolzen an dem unteren Endabschnitt eines Schwenkarmes (5) eines Öffnungsantriebs, welcher Schwenkarm mit dem oberen Endabschnitt mittels eines Drehlagers (6) verschwenkbar an einer Seitenwand (2) gelagert ist, wobei
- das Drehlager (6) mindestens höhenversetzt gegenüber dem Drehlager (7) am Halter (4) bei geschlossener Klappe (1), jedoch unterhalb der Schwenkachse (3) der Klappe (1) angeordnet ist,
- auf den Schwenkarm (5) eine Antriebskraft zum Öffnen angreift, **dadurch gekennzeichnet,**
**dass** an einer Seitenwand mindestens eine Sperrklinke angelenkt ist, die hinter einen Rastansatz an der Klappe (1) bei geschlossener Klappe greift, welche Sperrklinke durch eine Schwenkhebelanordnung, die mit der Klappe (1) mindestens während der Entriegelungsphase durch Ausübung eines Druckes auf den unteren Bereich der Klappe (1) in Wirkverbindung steht, derart verschwenkbar ist, dass die Sperrklinke über den Rastansatz angehoben wird und die durch einen Öffnungsantrieb (17) ausgeübte Schwenkbewegung der Klappe (1) nur durch Ausübung eines Druckes auf den unteren Bereich der Klappe (1) freigibt.

3. Sperre nach Anspruch 1, **dadurch gekennzeichnet,**
- **dass** der Sicherungshebel (8) an der Rückseite der Klappe (1) angelenkt ist, vorzugsweise im Bereich der oder auf der Schwenkachse (3) der Klappe (1),
- **dass** an dem Sicherungshebel (8) ein Sicherungselement (9) angebracht ist, das in einer Kulissenbahn (11) entlang gleitet, welche Kulissenbahn (11) eine stufenförmige Falle (10) im Einlaufbereich aufweist, in die das Sicherungselement (9) fällt, wenn die Klappe (1) geschlossen ist, und
- **dass** das Sicherungselement (9) oder der Sicherungshebel (8) von einem Hebelarm (12) einer Schwenkhebelanordnung (13) untergriffen wird, die in Wirkverbindung mit der Klappe (1) oder deren Schwenkarm (5) mindestens während der Dauer des ausgeübten Druckes auf den unteren Bereich der geschlossenen Klappe (1) und der Dauer der Druckentriegelung steht und das Sicherungselement (9) aus der Falle (10) anhebt, so dass dieses durch die Schwenkbewegung der Klappe in die Kulissenbahn (11) gleitet, während bei Druck auf den oberen Bereich der Klappe (1) durch das Sicherungselement (9) die Schwenkbewegung blockiert ist.

4. Sperre nach Anspruch 2 oder 3, **dadurch gekennzeichnet, dass** auf den Sicherungshebel (8) oder die Klinke eine Feder (23) wirkt und diese in Richtung des Fallenbodens oder in die Rastausnehmung hinter den Rastansatz drückt.

5. Sperre nach Anspruch 1, 3 oder 4, **dadurch gekennzeichnet, dass** die Falle (10) eine keilförmige Rampe (24) gegenüberliegend dem Kulissenbahneintritt aufweist, an dem das Sicherungselement (9) beim Schließen der Klappe (1) in Richtung des Fallenbodens gleitet.

6. Sperre nach Anspruch 3, **dadurch gekennzeichnet, dass** die Seitenfläche des stufenförmigen Absatzes der Kulissenbahn (11) innerhalb der Falle (10) zum Fallenboden in einen Winkel von ≤ 90° verläuft.

7. Sperre nach einem der Ansprüche 3 bis 5, **dadurch gekennzeichnet, dass** die Schwenkhebelanordnung (13) eine Winkelhebelanordnung ist, die um ein Drehlager (14) an der Seitenwand (2) verschwenkbar gelagert ist und einen Hebelarm (12) aufweist, der mit der oberen Stirnseite das Sicherungselement (9) bei geschlossener Klappe (1) und beim Push-Push-Folgeablauf untergreift, und einen winklig zum Hebelarm (12) verlaufenden zweiten Hebelarm mit einem Bolzen (15) aufweist, der in einer Herzkurve (16) geführt ist, die an einem das Drehlager (14) überstehenden Ende des Schwenkarms (5) angebracht ist, wobei die Herzkurvenführung so gewählt ist, dass der Bolzen (15) bei Druck auf den unteren Bereich der Klappe aus einer Sperrposition gleitet und gleichzeitig die Schwenkhebelanordnung (13) derart verschwenkt, dass das Sicherungselement (9) aus der Falle (10) angehoben und in die Kulissenbahn (11) eingleiten kann.

8. Sperre nach einem der vorhergehenden Ansprüche, **dadurch gekennzeichnet, dass** auf den Schwenkarm (5) als Öffnungsantrieb eine Feder (17) wirkt, die auf der Achse des oberen Drehlagers (6) des Schwenkarmes (5) mit aufgebracht ist.

9. Sperre nach einem der vorhergehenden Ansprüche, **dadurch gekennzeichnet, dass** der Schwenkarm (5) auf der Achse seines Drehlagers(6) einen Zahnkranz (22) aufweist, der in ein Zahnrad (21) einer Viskos- oder mechanischen Bremse (20) eingreift.

10. Sperre nach einem der vorhergehenden Ansprüche, **dadurch gekennzeichnet, dass** die Kulissenbahn (11) für die Führung des Sicherungselementes (9) bogenförmig verläuft und hinter der Achse des Drehlagers (14) der Schwenkhebelanordnung (13) angeordnet ist.

11. Sperre nach Anspruch 1, **dadurch gekennzeichnet, dass** die Klappe (1) zur Bildung der Schwenkachse (3) seitlich vorstehende Lagerzapfen (19) aufweist, die in, im rechten oder leicht geneigten Winkeln zur geschlossenen Klappe spiegelbildlich angeordnete und ins Innere der Öffnung sich erstreckende Kulissenbahnen (18) geführt sind, die in die Seitenwände (2) eingearbeitet oder in Schienen angeordnet sind.

12. Sperre nach einem der vorhergehenden Ansprüche, **dadurch gekennzeichnet, dass** die Teile der Klappenmechanik aus Kunststoff bestehen und die Gelenke in Steck- oder Aufrastverbindung realisiert sind.

13. Sperre nach Anspruch 4, **dadurch gekennzeichnet, dass** die Feder (23) am Halter (4) angebracht oder ausgeformt ist.

14. Sperre nach einem der vorhergehenden Ansprüche, **dadurch gekennzeichnet, dass** sie bei einer Klappe (1) in einem Fahrgastraum eines Kraftfahrzeugs vorgesehen ist, die die in der Öffnung eingesetzten elektronischen Geräte oder Behälter und Elemente verdeckt.

## Claims

1. Blocking element for preventing faulty operation of a flap (1) for closing an opening with at least two spaced-apart side walls (2), which flap (1)
- has at the upper side a pivot axle (3) which is mounted at the side walls (2) to be displaceable in the opening, and
- with at least one mount (4), which is provided at the rear side in the lower flap region at least on one side and which has a rotary bearing (7) for the bearing pin at the lower end section of a pivot arm (5) of an opening drive, which pivot arm is pivotably mounted by the upper end section by means of a rotary bearing (6) at a side wall (2), wherein
- the rotary bearing (6) is arranged at least displaced in height relative to the rotary bearing (7) at the mount (4) when the flap (1) is closed, but below the pivot axle (3) of the flap (1),
- a drive force for opening acts on the pivot arm (5),
**characterised in that** at least one securing lever (8) is articulated to the rear side of the flap (1) and has a securing element (9), which is guided in a guide path (11) with a catch (10) and drops into the catch (10) when the flap (1) is closed, which securing lever (8) is pivotable in such a manner by a pivot lever arrangement (13), which is disposed in operative connection with the flap (1) at least during the unlocking phase by exertion of a pressure on the lower region of the flap (1), that the securing element (9) is urged out of the catch (10) and the pivot movement, which is exerted by an opening drive (17), of the flap (1) is released only by exertion of a pressure on the lower region of the flap (1).

2. Blocking element for preventing faulty operation of a flap (1) for closing an opening with at least two spaced-apart side walls (2), which flap (1)
- has at the upper side a pivot axle (3) which is mounted at the side walls (2) to be displaceable in the opening, and
- with at least one mount (4), which is provided at the rear side in the lower flap region at least on one side and which has a rotary bearing (7) for the bearing pin at the lower end section of a pivot arm (5) of an opening drive, which pivot arm is pivotably mounted by the upper end section by means of a rotary bearing (6) at a side wall (2), wherein
- the rotary bearing (6) is arranged at least displaced in height relative to the rotary bearing (7) at the mount (4) when the flap (1) is closed, but below the pivot axle (3) of the flap (1),
- a drive force for opening acts on the pivot arm (5),
**characterised in that** at least one blocking pawl is articulated to a side wall and engages behind a detent projection at the flap (1) when the flap is closed, which blocking pawl is pivotable in such a manner by a pivot lever arrangement, which is disposed in operative connection with the flap (1) at least during the unlocking phase by exertion of a pressure on the lower region of the flap (1), that the blocking pawl is raised above the detent projection and the pivot movement, which is exerted by an opening drive (17), of the flap (1) is released only by exertion of a pressure on the lower region of the flap (1).

3. Blocking element according to claim 1, **characterised in that**
- the securing lever (8) is articulated to the rear side of the flap (1), preferably in the region of or on the pivot axle (3) of the flap (1),
- a securing element (9) is mounted on the securing lever (8) and slides along in a guide track (11), which guide track (11) has in the entry region a step-shaped catch (10) into which the securing element (9) drops when the flap (1) is closed and
- the securing element (9) or the securing lever (8) is engaged below by a lever arm (12) of a pivot lever arrangement (13) which is disposed in operative connection with the flap (1) or the pivot arm (5) thereof at least for the duration of the pressure exerted on the lower region of the closed flap (1) and the duration of the pressure unlocking and lifts the securing element (9) out of the catch (10) so that this slides by the pivot movement of the flap in the guide track (11), whereas in the case of pressure on the upper region of the flap (11) the pivot movement is blocked by the securing element (9).

4. Blocking element according to claim 2 or 3, **characterised in that** a spring (23) acts on the securing lever (8) or the pawl and urges this in the direction of the catch base or into the detent recess behind the detent projection.

5. Blocking element according to claim 1, 3 or 4, **characterised in that** the catch (10) has a wedge-shaped ramp (24) opposite the guide track entry, at which the securing element (9) slides during closing of the flap (1) in direction of the catch base.

6. Blocking element according to claim 3, **characterised in that** the side surface of the step-shaped projection of the guide track (11) runs within the catch (10) towards the catch base at an angle of ≤ 90°.

7. Blocking element according to any one of claims 3 to 5, **characterised in that** the pivot lever arrangement (13) is a bell-crank arrangement which is mounted to be pivotable about a rotary bearing (14) at the side wall (2) and has a lever arm (12) which engages under the upper end of the securing element (9) when the flap (1) is closed and during push-push sequence, and has a second lever arm, which extends at an angle to the lever arm (12), with a pin (15) which is guided in a heart cam (16) mounted at an end of the pivot arm (5) protruding beyond the rotary bearing (14), wherein the heart cam guide is so selected that the pin (15) in the case of pressure on the lower region of the flap slides out of a blocking position and at the same time pivots the pivot lever arrangement (13) in such a manner that the securing element (9) lifts out of the catch (10) and can slide into the guide track (11).

8. Blocking element according to any one of the preceding claims, **characterised in that** a spring (17) acts on the pivot arm (5) as opening drive and is mounted on the axle of the upper rotary bearing (6) of the pivot arm (5).

9. Blocking element according to any one of the preceding claims, **characterised in that** the pivot arm (5) has on the axle of its rotary bearing (6) a rim gear (22) which engages in a gearwheel (21) of a viscous or mechanical brake (20).

10. Blocking element according to any one of the preceding claims, **characterised in that** the guide track (11) for guidance of the securing element (9) extends curvilinearly and is arranged behind the axle of the rotary bearing (14) of the pivot lever arrangement (13).

11. Blocking element according to claim 1, **characterised in that** flap (1) has, for formation of the pivot axle (3), laterally protruding bearing pins (19) which are arranged at right angles or slightly inclined angles to the closed flap in mirror image and are guided in guide tracks (18), which extend in the interior of the opening and which are formed in the side walls (2) or arranged in rails.

12. Blocking element according to any one of the preceding claims, **characterised in that** the parts of the flap mechanism consist of plastics material and the joints are realised in plug or detent connection.

13. Blocking element according to claim 4, **characterised in that** the spring (23) is mounted or formed at the mount (4).

14. Blocking element according to any one of the preceding claims, **characterised in that** it is provided at a flap (1) in a passenger compartment of a motor vehicle and covers electronic apparatus or containers and elements inserted into the opening.

## Revendications

1. Dispositif de verrouillage pour empêcher une erreur de manipulation d'un volet (1) destiné à refermer une ouverture avec au moins deux parois latérales écartées (2), ledit volet (1) :
- comporte du côté supérieur un axe de pivotement (3) qui est monté en translation dans l'ouverture au niveau des parois latérales (2), et
- comprend au moins un support (4) prévu sur un côté au niveau de la face postérieure dans la région inférieure du volet et un palier rotatif (7) pour le goujon de montage prévu au niveau du tronçon terminal inférieur d'un bras pivotant (5) d'un entraînement d'ouverture, ledit bras pivotant étant monté en pivotement sur une paroi latérale (2) par le tronçon terminal supérieur au moyen d'un palier de rotation (6), et
- le palier rotatif (6) est agencé au moins avec décalage en hauteur par rapport au palier rotatif (7) sur le support (4) quand le volet (1) est fermé, mais au-dessous de l'axe de pivotement (3) du volet (1),
- une force d'entraînement destinée à l'ouverture est appliquée au bras pivotant (5),
**caractérisé en ce que**
sur la face postérieure du volet (1) est articulé au moins un levier de blocage (8) qui présente un élément de blocage (9) guidé dans une voie à glissière (11) avec un piège (10) et tombant dans le piège (10) quand le volet (1) est fermé, ledit levier de blocage (8) pouvant être pivoté, via un agencement à levier pivotant (13) qui coopère avec le volet (1) au moins pendant la phase de déverrouillage en exerçant une pression sur la région inférieure du volet (1), de telle manière que l'élément de blocage (9) est poussé hors du piège (10) et libère le mouvement de pivotement du volet (1) exercée et par un entraînement d'ouverture (17) uniquement en exerçant une pression sur la région inférieure du volet (1).

2. Dispositif de verrouillage pour empêcher une erreur de manipulation d'un volet (1) destiné à refermer une ouverture avec au moins deux parois latérales écartées (2), ledit volet (1) :
- comporte du côté supérieur un axe de pivotement (3) qui est monté en translation dans l'ouverture au niveau des parois latérales (2), et
- comprend au moins un support (4) prévu sur un côté au niveau de la face postérieure dans la région inférieure du volet et un palier rotatif (7) pour le goujon de montage prévu au niveau du tronçon terminal inférieur d'un bras pivotant (5) d'un entraînement d'ouverture, ledit bras pivotant étant monté en pivotement sur une paroi latérale (2) par le tronçon terminal supérieur au moyen d'un palier de rotation (6), et
- le palier rotatif (6) est agencé au moins avec décalage en hauteur par rapport au palier rotatif (7) sur le support (4) quand le volet (1) est fermé, mais au-dessous de l'axe de pivotement (3) du volet (1),
- une force d'entraînement destinée à l'ouverture est appliquée au bras pivotant (5),
**caractérisé en ce que**
au moins un loquet de verrouillage est articulé sur une paroi latérale, ce loquet s'engageant derrière un talon d'enclenchement sur le volet (1) quand le volet est fermé et pouvant être pivoté via un agencement à levier pivotant, qui coopère avec le volet (1) au moins pendant la phase de déverrouillage en exerçant une pression sur la région inférieure du volet (1), de telle manière que le loquet de verrouillage est soulevé au-dessus du talon d'enclenchement et libère le mouvement de pivotement du volet (1), exercé par un entraînement d'ouverture (17), uniquement en exerçant une pression sur la région inférieure du volet (1).

3. Dispositif de verrouillage selon la revendication 1,
**caractérisé en ce que**
- le levier de blocage (8) est articulé sur la face postérieure du volet (1), de préférence dans la zone de ou sur l'axe de pivotement (3) du volet (1),
- un élément de blocage (9) est monté sur le levier de blocage (8), cet élément coulissant le long d'une voie à glissière (11), cette voie à glissière (11) comportant dans la zone d'entrée un piège (10) en forme de gradin, dans lequel tombe l'élément de blocage (9) quand le volet (1) est fermé, et
- l'élément de blocage (9) ou le levier de blocage (8) est engagé par dessous par un bras de levier (12) d'un agencement à levier pivotant (13) qui coopère avec le volet (1) ou avec son bras pivotant (5) au moins pendant la durée pendant laquelle la pression est exercée sur la région inférieure du volet fermé (1) et pendant la durée du déverrouillage sous pression, et qui soulève l'élément de blocage (9) hors du piège (10), de sorte que cet élément coulisse dans la voie à glissière (11) en raison du mouvement de pivotement du volet, tandis que le mouvement de pivotement est bloqué par l'élément de blocage (9) en cas de pression sur la région supérieure du volet (1).

4. Dispositif de verrouillage selon la revendication 2 ou 3, **caractérisé en ce qu'**un ressort (23) agit sur le levier de blocage (8) ou sur le loquet et pousse celui-ci en direction du fond du piège où dans l'évidement d'enclenchement derrière le talon d'enclenchement.

5. Dispositif de verrouillage selon la revendication 1, 3 ou 4, **caractérisé en ce que** le piège (10) comporte une rampe en forme de coin (24) à l'opposé de l'entrée de la voie à glissière, sur laquelle coulisse l'élément de blocage (9) en direction du fond du piège lors de la fermeture du volet (1).

6. Dispositif de verrouillage selon la revendication 3, **caractérisé en ce que** la surface latérale du talon en forme de gradin de la voie à glissière (11) s'étend à l'intérieur du piège (10) en direction du fond du piège sous un angle inférieur ou égal 90°.

7. Dispositif de verrouillage selon l'une des revendications 3 à 5, **caractérisé en ce que** l'agencement à levier pivotant (13) est un agencement à levier coudé qui est monté en pivotement sur la paroi latérale (2) autour d'un palier rotatif (14) et présente un bras de levier (12) qui engage par sa face frontale supérieure l'élément de blocage (9) lorsque le volet (1) est fermé et pendant la course successive dite "push-push", et comprend un second bras de levier, disposé sous un angle par rapport au bras de levier (12), avec un goujon (15) qui est guidé dans une came (16) en forme de cardioïde (16), laquelle est montée sur une extrémité du bras pivotant (5) qui dépasse le palier rotatif (14), dans lequel le tracé de la came cardioïde est ainsi choisi que le goujon (15) coulisse, en cas de pression sur la région inférieure du volet, hors d'une position de blocage et fait simultanément pivoter l'agencement à levier pivotant (13) de telle manière que l'élément de blocage (9) est soulevé hors du piège (10) et peut entrer en coulissant dans la voie à glissière (11).

8. Dispositif de verrouillage selon l'une des revendications précédentes, **caractérisé en ce qu'**un ressort (17) agit sur le bras pivotant (5) à titre d'entraînement d'ouverture, ledit ressort étant monté sur l'axe du palier rotatif supérieur (6) du bras pivotant (5).

9. Dispositif de verrouillage selon l'une des revendications précédentes, **caractérisé en ce que** le bras pivotant (5) présente, sur l'axe de son palier rotatif (6), une couronne dentée (22) qui s'engage dans une roue dentée (21) d'un frein visqueux ou d'un frein mécanique (20).

10. Dispositif de verrouillage selon l'une des revendications précédentes, **caractérisé en ce que** la voie à glissière (11) pour le guidage de l'élément de blocage (9) s'étend en forme d'arc et est agencée derrière l'axe du palier rotatif (14) de l'agencement à levier pivotant (13).

11. Dispositif de verrouillage selon la revendication 1, **caractérisé en ce que** le volet (1) présente, pour former l'axe de pivotement (3), des tenons de montage (19) en dépassement latéral, qui sont guidés dans des voies à glissière (18) qui s'étendent vers l'intérieur de l'ouverture, agencées de manière symétrique sous des angles droits ou sous des angles légèrement inclinés par rapport au volet fermé, ces voies à glissière étant ménagées dans les parois latérales (2) ou étant agencées dans des rails.

12. Dispositif de verrouillage selon l'une des revendications précédentes, **caractérisé en ce que** les pièces du mécanisme de volet sont en matière plastique et les articulations sont réalisées par des liaisons à enfichage ou à enclenchement.

13. Dispositif de verrouillage selon la revendication 4, **caractérisé en ce que** le ressort (23) est monté ou conformé sur le support (4).

14. Dispositif de verrouillage selon l'une des revendications précédentes, **caractérisé en ce qu'**il est prévu pour un volet (1) dans un habitacle d'un véhicule automobile, qui recouvre des appareils électroniques, ou des récipients et des éléments mis en place dans l'ouverture.
